# EUROPEAN PATENT APPLICATION

(11) **EP 0 748 963 A1**
(43) Date of publication of application: **18.12.1996**
(21) Application number: 96109508.0
(22) Date of filing: 13.06.1996
(51) Int. Cl.: F16H 61/36

(54) **Vehicle gearbox control device**

(30) Priority: 16.06.1995 IT TO950504
(71) Applicant: ROLTRA MORSE S.p.A., I-86077 Pozzilli (IT)
(72) Inventor: Bravo, Ernesto, 10020 Cambiano (IT)
(74) Representative: Franzolin, Luigi

(57) **Abstract**

A vehicle gearbox control device (1) presenting a control lever (5) rotatable about a first and second axis (A, B), perpendicular to each other, to respectively select and engage a gear via respective transmission elements (47, 40); the control lever (5) being molded in one piece from plastic material, and presenting, integrally, a rod (14), a grip (15) at the top, an intermediate seat (20) for a hinge pin (24), and a connecting element (17) at the bottom for connection to one of the transmission elements (47).

## Description

The present invention relates to a vehicle gearbox control device, or more specifically to a gearshift control device.

Known gearshift control devices substantially comprise a control lever secured to the vehicle by appropriate supporting means so as to rotate about two perpendicular axes. The two rotational movements of the lever, normally in a transverse and longitudinal plane in relation to the vehicle, activate respective gearbox members by means of linkage elements or mechanisms to respectively select and engage a given gear. The lever normally comprises a tubular metal rod fitted at the top end with a grip, and the bottom end of which is fitted rigidly, e.g. welded, with one or more mechanical elements for connection to the other members of the device, e.g. an element for articulated connection to the supporting means, and an element for connection to a respective linkage element.

As such, levers of the aforementioned type are heavy, of complex design, and expensive to produce and assemble.

It is an object of the present invention to provide a gearshift control device designed to overcome the aforementioned drawbacks typically associated with known devices.

According to the present invention, there is provided a vehicle gearbox control device comprising:
supporting means fitted to the vehicle body;
a control lever secured to said supporting means so as to rotate about a first and second axis substantially perpendicular to each other; and
a first and second transmission interposed between said control lever and said gearbox, for respectively converting rotation of the control lever about said first axis into selection of at least one gear of said gearbox, and rotation of the control lever about said second axis into engagement of a gear of said gearbox;
characterized in that said control lever is molded in one piece from plastic material, and comprises, integrally, a rod; articulating means for connecting said rod in articulated manner to said supporting means; and connecting means for connecting the control lever to at least one of said transmissions.

A preferred, non-limiting embodiment of the present invention will be described by way of example with reference to the accompanying drawings, in which:
Figure 1 shows a side view of a gearshift control device in accordance with the teachings of the present invention;
Figure 2 shows a section along line II-II in Figure 1;
Figure 3 shows a partial opposite side view of the Figure 1 device;
Figure 4 shows a partially sectioned, partial side view of a detail of the Figure 1 device according to a variation of the present invention;
Figure 5 shows a side view of a detail of the Figure 1 device according to a further variation of the present invention;
Figure 6 shows a section along line VI-VI in Figure 5.

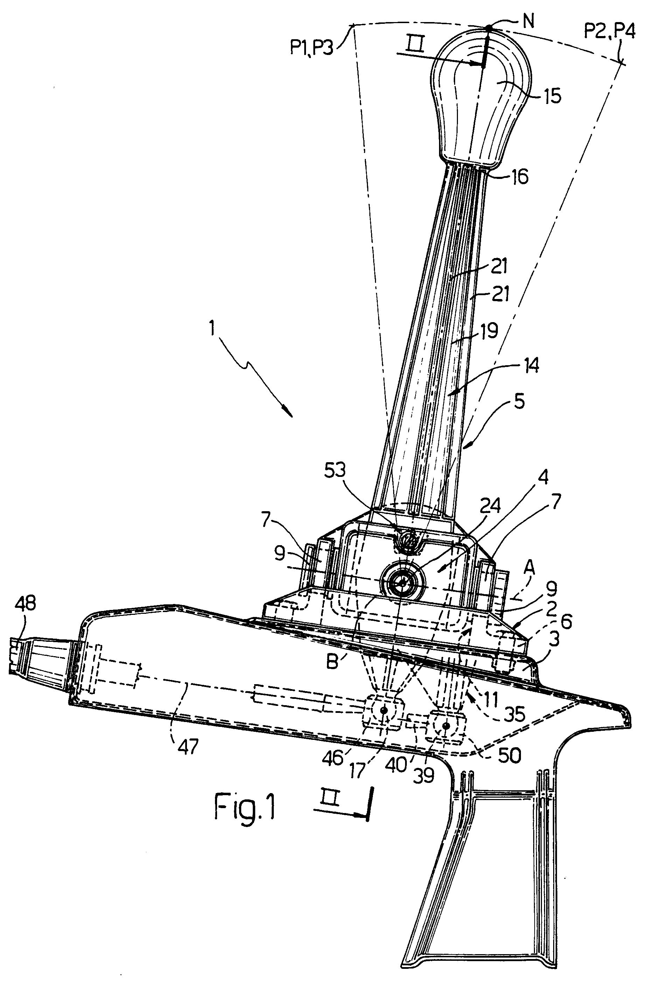

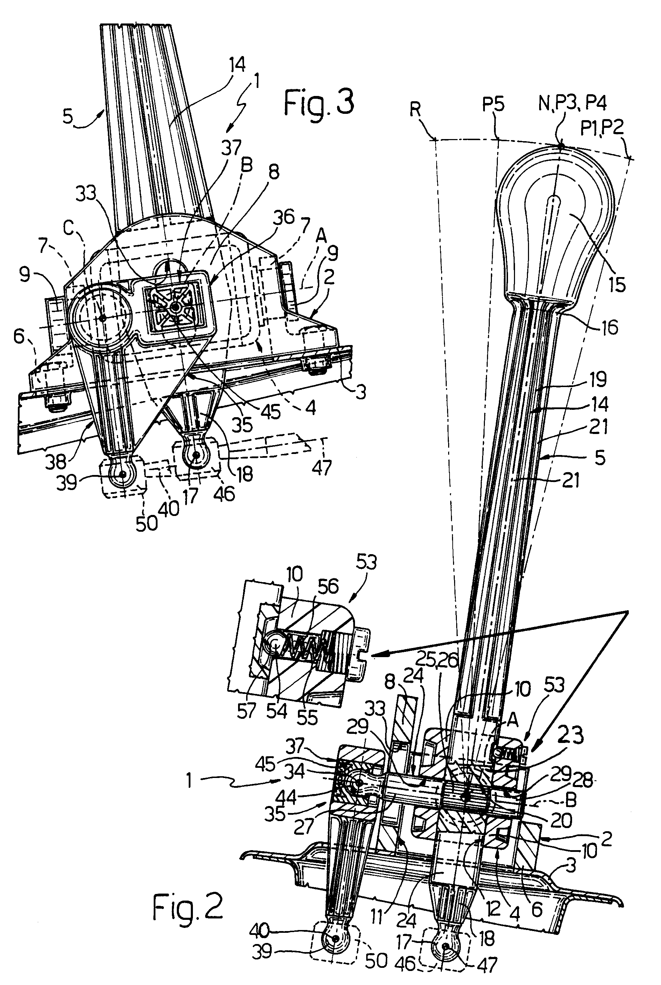

Number 1 in Figures 1 and 2 indicates a control device for a vehicle gearbox (not shown).

Device 1 substantially comprises a fixed support 2 fitted rigidly to a vehicle body element 3; an intermediate element 4 rotatable in relation to support 2 about a first axis A; and a control lever 5 fitted to intermediate element 4 and rotatable in relation to it about a second axis B perpendicular to axis A.

Lever 5 is thus rotatable, in relation to fixed support 2, about axis A (fixed) and axis B (movable with intermediate element 4); axis A is substantially longitudinal in relation to the vehicle, and rotation about it provides for selecting the gears; axis B is crosswise to the vehicle, and rotation about it by lever 5 provides for engaging or disengaging the gears; and operation of lever 5 is transmitted to the gearbox (not shown) by linkage means described later on.

Support 2 presents a substantially frame-like anchoring base 6 defining a central opening 11, and from which respective walls 7 extend upwards from the front and rear sides, and a lateral wall 8 extends upwards from one longitudinal side.

Intermediate element 4 is substantially parallelepiped, and is housed between and hinged to walls 7 by respective end pins 9 of axis A.

Support 2 and intermediate element 4 are conveniently molded from plastic material.

Intermediate element 4 presents a longitudinal through opening 12 perpendicular to axes A and B, defined laterally by two parallel lateral walls 10 of intermediate element 4, and presenting a cross section (in a plane parallel to axes A and B) in the form of an elongated rectangle extending in the direction of axis A.

According to the present invention, lever 5 is molded in one piece from plastic material, and comprises a rod 14 fitted through opening 12 in intermediate element 4; a grip 15 integral with the top end 16 of rod 14; and a spherical articulating head 17 extending from the bottom end 18 of rod 14, and for connecting rod 14 to an engagement control cable 47, as described later on.

Rod 14 comprises a substantially elliptical-section top portion 19 tapering towards grip 15 and presenting longitudinal cross ribs 21; and a substantially rectangular-section bottom portion 23 housed in sliding manner with a small amount of lateral clearance inside opening 12, and presenting a transverse through hole 20, of axis B, defining a seat for a pin 24 permitting rod 14 to pivot in relation to intermediate element 4 (Figure 2).

Pin 24 presents an intermediate portion 25 with grooves 26, which is interference fitted inside hole 20 so that it is rigidly connected to lever 5; and axial end portions 27, 28 engaging in radially slack manner respective holes 29, of axis B, formed in the lateral walls 10 of intermediate element 4.

One (27) of the two axial end portions extends axially outwards of intermediate element 4 and beyond lateral wall 8 of support 2 - which, for the purpose, presents a vertically elongated opening 33 - to form a spherical end head 34 which acts as an articulating element for controlling a linkage lever 35.

Lever 35 is made of plastic material, is substantially square, and is hinged to lateral wall 8 of support 2 to pivot about an axis C (Figure 3) perpendicular to axis A, crosswise to the vehicle, and shifted rearwards in relation to axis B. Lever 35 presents an arm 36 extending frontwards in a substantially longitudinal direction in relation to the vehicle, and connected to head 34 of pin 24 by an articulating element 37; and an arm 38 extending substantially downwards, and presenting a spherical end head 39 for connection to a gear selection control cable 40 as described later on.

Articulating element 37 comprises a parallelepiped block of plastic material with a low friction coefficient, and presenting a spherical seat 44 cooperating with head 34 of pin 24. Block 37 is housed in sliding manner inside an opening 45 in arm 36, and is permitted to move axially and radially in relation to axis C, but with no tangential slack in relation to it.

Spherical head 17 of lever 5 cooperates in known manner with an articulating element 46 (shown by the dotted line in Figures 1, 2, 3) presenting a complementary spherical seat, and fitted to one end of engagement control cable 47. Cable 47 is a Bowden cable, and presents a sheath 48 with one end fitted to vehicle body element 3 and substantially parallel to axis A.

Similarly, spherical head 39 of linkage lever 35 cooperates with an articulating element 50 (shown by the dotted line in Figures 1, 2, 3) presenting a complementary spherical seat, and fitted to one end of selection control cable 40. Cable 40 is a Bowden cable, and presents a sheath (not shown) with one end fitted to vehicle body element 3 and also substantially parallel to axis A.

With reference to Figure 2, number 53 indicates a device for stabilizing the relative position of control lever 5 and intermediate element 4. Device 53 substantially comprises a ball 54 housed inside a transverse hole 55 in a lateral wall 10 of intermediate element 4, and pushed by a spring 56 onto lever 5; and a number of impressions 57 formed on lever 5 and so located as to correspond with the neutral and gear engagement positions.

Device 1 operates as follows.

To select a given gear, grip 15 of control lever 5 is shifted laterally (Figure 2) to rotate lever 5, pin 24 integral with lever 5, and intermediate element 4 about axis A; the rotation of pin 24 about axis A crosswise to it produces an upward or downward movement, along an arc of a circle, of spherical head 34 which, via articulating element 37, transmits the movement to linkage lever 35; and lever 35 rotates about axis C to activate relative cable 40 to shift the relative selection members inside the gearbox. The selection positions relative to a five-speed plus reverse gearbox are shown in Figure 2, in which the numbers preceded by the letter P indicate the corresponding gears, N indicates the neutral position, and R the reverse gear.

Once the required selection position is reached, the relative gear is engaged by moving grip 15 of lever 5 forwards or backwards to rotate lever 5 about axis B and so activate cable 47. The neutral and engaged positions shown in Figure 1 using the same references as in Figure 2 are stabilized by device 53, which prevents any undesired in-service oscillation of lever 5.

The advantages of the gearshift control device according to the present invention will be clear from the foregoing description.

In particular, the control lever is molded in one piece from plastic material, which enables the formation of relatively complex shapes and, hence, provides for integrally forming parts which, in known devices, would be made separately and then assembled, e.g. grip 15, spherical head 17 for connection to cable 47, seat 20 for hinge pin 24, and impressions 57 of stabilizing device 53.

The present invention therefore provides for simplifying manufacture and assembly, reducing overall cost, and greatly reducing the weight of lever 5.

The overall weight of device 1 is further reduced by also using plastic material for the other main parts of the device (support 2, intermediate element 4 and lever 35).

Using plastic material for the contacting and mutually sliding parts also provides for eliminating supporting elements such as bushes, and hence for further simplifying the device.

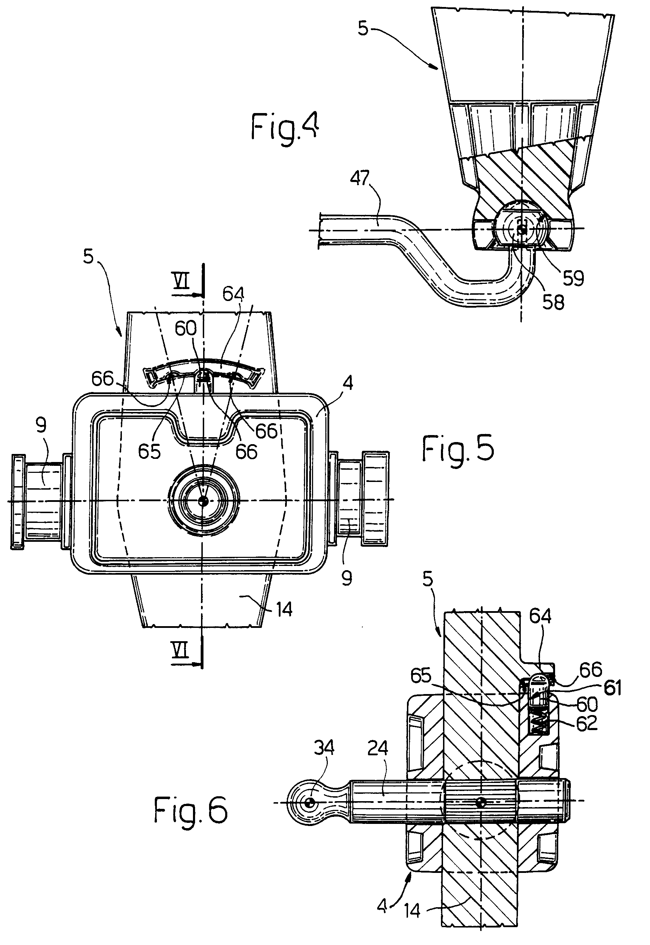

Figures 4 to 6 show possible variations of device 1. More specifically, Figure 4 shows a different connection of cable 47 to lever 5, wherein cable 47 presents a spherical head 58 which is pressed into and snaps inside a corresponding spherical seat 59 formed on the bottom end 18 of lever 5.

Figures 5 and 6 show an alternative embodiment of stabilizing device 53, which in this case comprises a semispherical-headed pin 60 sliding inside a hole 61 in a lateral wall 10 of intermediate element 4, and with its axis perpendicular to axes A and B. Pin 60 is pushed by a spring 62 onto a curved projection 64 integral with lever 5, and the concave surface 65 of which faces pin 60 and presents impressions 66 located to correspond with the neutral and engagement positions.

Clearly, changes may be made to device 1 as described and illustrated herein without, however, departing from the scope of the present invention.

In particular, one or both of the linkage cables may be replaced by rigid rods.

## Claims

1. A vehicle gearbox control device (1) comprising:
supporting means (2, 4) fitted to the vehicle body;
a control lever (5) secured to said supporting means so as to rotate about a first (A) and second (B) axis substantially perpendicular to each other; and
a first (47) and second (35, 40) transmission interposed between said control lever (5) and said gearbox, for respectively converting rotation of the control lever (5) about said first axis (A) into selection of at least one gear of said gearbox, and rotation of the control lever (5) about said second axis (B) into engagement of a gear of said gearbox;
characterized in that said control lever (5) is molded in one piece from plastic material, and comprises, integrally, a rod (14); articulating means (20) for connecting said rod (14) in articulated manner to said supporting means (4); and connecting means for connecting the control lever (5) to at least one of said transmissions (47).

2. A device as claimed in Claim 1, characterized in that said control lever (5) comprises a grip (15) integral with the top end (16) of said rod (14).

3. A device as claimed in Claim 1 or 2, characterized in that said supporting means comprise a support (2) fitted to said vehicle body (3); and an intermediate element (4) hinged to said support (2) about said first axis (A); said control lever (5) being hinged to said intermediate element (4) about said second axis (B).

4. A device as claimed in Claim 3, characterized in that said articulating means of said control lever comprise a seat (20) for a hinge pin (24) for connecting the control lever in articulated manner to said intermediate element (4).

5. A device as claimed in any one of the foregoing Claims, characterized in that said second transmission comprises an elongated transmission element (47) activated directly by said control lever (5) by means of said connecting means (17).

6. A device as claimed in Claim 5, characterized in that said connecting means comprise a spherical articulating element (17) integral with the opposite end (18) of said control lever (5) to said grip (15).

7. A device as claimed in Claim 6, characterized in that said spherical articulating element (17) of said control lever (5) is a spherical head engaging a corresponding spherical seat (46) integral with said elongated transmission element (47).

8. A device as claimed in Claim 6, characterized in that said spherical articulating element is a spherical seat (59) engaged by a corresponding spherical head (58) integral with said elongated transmission element (47).

9. A device as claimed in any one of the foregoing Claims from 2 to 8, characterized in that said first transmission comprises a square linkage lever (35) hinged to said support (2) about a third axis (C) perpendicular to said first axis (A); said square linkage lever comprising a first arm (36) connected operatively to said control lever (5), and a second arm (38) connected to a respective elongated transmission element (40).

10. A device as claimed in Claim 9 dependent on any one of the foregoing Claims from 4 to 8, characterized in that said control lever (5) is connected to said linkage lever (35) by said hinge pin (24).

11. A device as claimed in Claim 10, characterized in that said hinge pin (24) comprises an intermediate portion connected rigidly to said control lever (5); and a pair of end portions (27, 28) connected in angularly free manner to said intermediate element (4); one (27) of said end portions being connected to said first arm (36) of said linkage lever (35) by means of a ball joint (37).

12. A device as claimed in Claim 11, characterized in that said ball joint comprises a spherical head (34) forming part of said hinge pin (24) of said control lever (5); and a block (37) presenting a corresponding spherical seat (44), and secured to said first arm (36) of said linkage lever (35) in axially and radially slack manner in relation to said third axis (C).
